(19) **Europäisches Patentamt European Patent Office Office européen des brevets**

(11) **EP 4 726 947 A1**

(12) **EUROPEAN PATENT APPLICATION**

(43) Date of publication:
15.04.2026 Bulletin 2026/16

(21) Application number: 24206440.0

(22) Date of filing: 14.10.2024

(51) International Patent Classification (IPC):
$H02J\ 3/28^{(2026.01)}$   $C25B\ 1/04^{(2021.01)}$
$C25B\ 15/02^{(2021.01)}$   $H02J\ 15/00^{(2026.01)}$
$H02J\ 3/30^{(2026.01)}$   $H02J\ 3/32^{(2026.01)}$

(52) Cooperative Patent Classification (CPC):
H02J 15/50; C25B 1/04; C25B 15/02; H02J 3/28;
H02J 3/30; H02J 3/32; H02J 2105/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Hitachi Energy Ltd
8050 Zürich (CH)

(72) Inventors:
• PAN, Jiuping
  Raleigh, 27606 (US)

• ZHANG, Weichi
  Beijing, 100015 (CN)
• JIANG, Wen
  Beijing, 102218 (CN)
• BOLZONI, Alberto
  5408 Ennetbaden (CH)
• JOHANSSON, Nicklas
  722 46 Västerås (SE)
• SVENSSON, Jan
  723 46 Västerås (SE)

(74) Representative: Vossius & Partner
Patentanwälte Rechtsanwälte mbB
Siebertstrasse 3
81675 München (DE)

(54) **BALANCING CONTROL OF HYDROGEN PLANT**

(57) Green-hydrogen plants, connected to weak power grids in geographically remote areas, are prone to frequency fluctuations and instability due to the variability in renewable-energy generation. Disclosed embodiments provide balancing control within the green-hydrogen plant to provide both fast frequency response during contingency conditions and automatic frequency regulation during normal conditions. The fast frequency response may be centralized or distributed, and may combine frequency droop response with fast frequency response or synthetic inertial response. The automatic frequency regulation may determine optimal allocations of a total net power adjustment, which compensates a balance control error in the system, to a plurality of different power resources of the green-hydrogen plant. These power resources may comprise electrolyzer plant(s), renewable energy source(s), and/or energy storage system(s).

FIG. 1

EP 4 726 947 A1

## Description

## BACKGROUND

Field of the Invention

The embodiments described herein are generally directed to control of a hydrogen plant, and, more particularly, to balancing control in a green-hydrogen plant connected to a weak power grid in a geographically remote area.

Description of the Related Art

"Green hydrogen" refers to the hydrogen that is produced by splitting water into hydrogen and oxygen using renewable electrical energy. Green hydrogen is a critical enabler of the global transition to sustainable energy and net-zero emissions.

Large-scale green-hydrogen plants can be categorized as either grid-connected or remotely located. Grid-connected green-hydrogen plants are connected to a main power grid and powered by contracted renewable energy sources (RES). Remotely located green-hydrogen plants, on the other hand, are typically co-developed with dedicated renewable energy sources, such as wind, solar, or hybrid wind and solar sources, in geographically remote areas, and connected to a "weak" power grid. In this context, the term "weak" means that the installed capacity of the green-hydrogen plant is significantly higher, in order of magnitude, than the total resource capacity of the power grid.

Whether grid-connected or remotely located, the green-hydrogen plant can operate as a flexible load and provide ancillary services, such as frequency response. However, relative to a grid-connected green-hydrogen plant, the inertia level of a remotely located green-hydrogen plant, connected to a weak power grid, is low. As a result, the frequency of the system is prone to instability due to a higher rate of change of frequency (ROCOF) and drastic frequency deviations in the event of a sudden load rejection or generation loss. In addition, even under normal operating conditions, the remotely located green-hydrogen power plant is exposed to severe frequency fluctuations due to the high variability in power generation by the renewable energy sources. The present disclosure is directed towards overcoming these and other problems discovered by the inventors.

## SUMMARY

Systems, methods, and non-transitory computer-readable media are disclosed for balancing control of hydrogen plants, and particularly, remotely located green-hydrogen plants connected to weak power grids. A first objective, achievable by disclosed embodiments, is the stable operation of a hydrogen plant, particularly in a geographically remote area where the local power grid is comparatively weak. A second objective, achievable by disclosed embodiments, is a fast and adequate frequency response that injects more energy into the system than state-of-the-art frequency responses.

In an embodiment, a method of controlling a hydrogen plant comprises using at least one hardware processor to: monitor system frequency within the hydrogen plant; detect a frequency disturbance in the monitored system frequency; and in response to detecting the frequency disturbance, for each of at least a first subset of a plurality of power resources in the hydrogen plant, determine a power adjustment for the power resource according to a fast frequency response (FFR) scheme, and control the power resource based on the determined power adjustment. The plurality of power resources may comprise at least one electrolyzer plant, at least one renewable energy source, and at least one energy storage system, electrically connected to each other by an internal transmission network.

The FFR scheme may comprise: by a centralized energy management system of the hydrogen plant, estimating a power imbalance; and allocating power adjustments to each of the at least a first subset of power resources based on the estimated power imbalance. Controlling the power resource based on the determined power adjustment may comprise, by a local controller of the power resource, over a time period, in real time: determining a fast frequency response for that power resource; determining a frequency droop response for that power resource; and selecting a maximum of the fast frequency response and the frequency droop response as the power adjustment for that power resource. The maximum of the fast frequency response and the frequency droop response may be subject to one or more limits. The one or more limits may comprise a first limit on a rate of change in power, and a second limit on a frequency response capability.

The FFR scheme may comprise, by a local controller of each of the at least a first subset of power resources, determining the power adjustment for that power resource based on a synthetic inertial response and a frequency droop response for that power resource. Determining the power adjustment for each power resource may comprise, over a time period, in real time: determining the synthetic inertial response for that power resource; determining the frequency droop response for that power resource; and calculating a sum of the synthetic inertial response and the frequency droop response as the power adjustment for that power resource. The sum of the synthetic inertial response and the frequency droop response may be subject to one or more limits. The one or more limits may comprise a first limit on a rate of change in power, and a second limit on a frequency response capability.

The hydrogen plant may be electrically connected to a local power grid by a tie line. The method may further comprise using the at least one hardware processor to: detect a violation in frequency or power flow on the tie line; and in response to detecting the violation, for each of at least a second subset of the plurality of power resources, determine a power adjustment for the power resource according to automatic frequency regulation, and control the power resource based on the determined power adjustment. The automatic frequency regulation may comprise: calculating a balance control error; and determining an optimal adjustment for each of the at least a second subset of power resources based on the balance control error. The balance control error (BCE) may be calculated as:

$$BCE = (TIA - TIS) - 10B(FA - FS)$$

wherein $TIA$ is an actual power interchange on the tie line, $TIS$ is a scheduled power interchange on the tie line, $B$ is a bias, $FA$ is an actual frequency, and $FS$ is a scheduled or nominal frequency. Determining the optimal adjustment may comprise: determining a total net power adjustment to compensate the balance control error; and determining an optimal allocation of the total net power adjustment to each of the at least a second subset of power resources. The at least a second subset of power resources may comprise at least one electrolyzer plant, at least one renewable energy source, and at least one energy storage system. Determining the optimal allocation may comprise: when the balance control error violates an upper limit, one or more of increasing production of hydrogen by the at least one electrolyzer plant, charging the at least one energy storage system, or reducing power generation by the at least one renewable energy source; and when the balance control error violates a lower limit, one or more of reducing production of hydrogen by the at least one electrolyzer plant, discharging the at least one energy storage system, or increasing power generation by the at least one renewable energy source.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processorbased system, such as a server, and/or in executable instructions stored in a non-transitory computer-readable medium.

BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example system, in which one or more of the processes described herein may be implemented, according to an embodiment;
FIG. 2 illustrates an example processing system, by which one or more of the processes described herein may be executed, according to an embodiment;
FIG. 3 illustrates a process for balancing control of a hydrogen plant, according to an embodiment;
FIG. 4 illustrates a centralized fast frequency response (FFR) scheme, according to an embodiment;
FIG. 5 illustrates a frequency disturbance and the frequency response by a centralized FFR scheme, according to an embodiment;
FIG. 6 illustrates a distributed FFR scheme, according to an embodiment;
FIG. 7 illustrates the frequency responses by two embodiments of a distributed FFR scheme, according to an embodiment;
FIG. 8 illustrates the frequency droop characteristics of active power for an electrolyzer plant and renewable energy source, respectively, according to an example; and
FIG. 9 illustrates an example of automatic frequency regulation (AFR) in a process for balancing control, according to an embodiment.

**DETAILED DESCRIPTION**

In an embodiment, systems, methods, and non-transitory computer-readable media are disclosed for balancing control of hydrogen plants, and particularly, remotely located green-hydrogen plants connected to weak power grids. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

1. Infrastructure

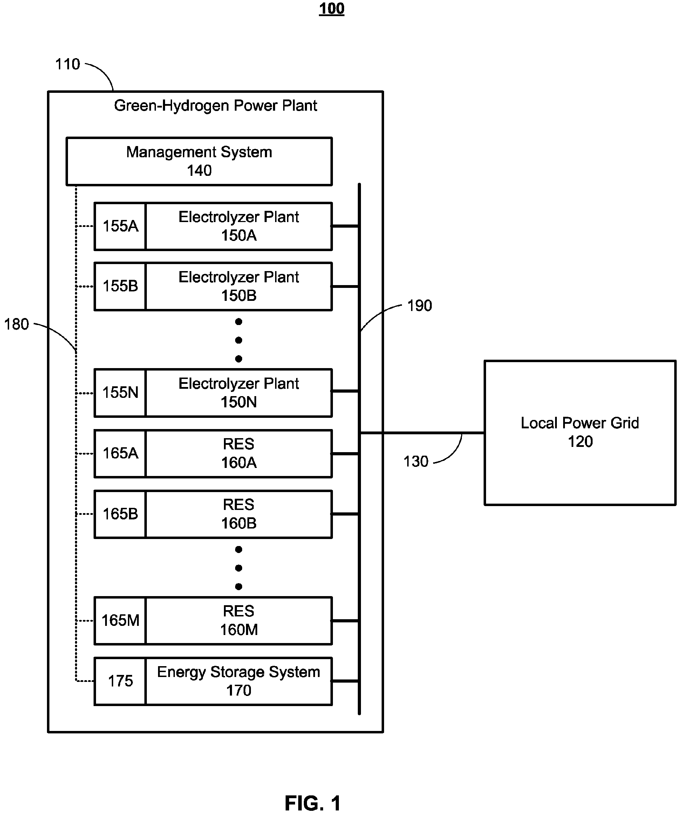

FIG. 1 illustrates an example system 100, in which one or more of the disclosed processes may be implemented, according to an embodiment. System 100 may comprise a hydrogen plant 110, which may be a green-hydrogen plant, and a local power grid 120, which may be a weak power grid. Hydrogen plant 110 is electrically connected to local power grid 120 by a tie line 130. Hydrogen plant 110 may be located in a geographically remote area, such that hydrogen plant 110 does not have access to a main power grid with a higher resource capacity than its own capacity.

Hydrogen plant 110 may comprise an energy management system 140, one or more electrolyzer plants 150, one or more renewable energy sources 160, and/or one or more energy storage systems 170. Collectively, electrolyzer plant(s) 150, renewable energy source(s) 160, and energy storage system(s) 170 represent the power resources of hydrogen plant 110. Thus, as used herein, the term "power resource" should be understood to refer any one of an electrolyzer plant 150, renewable energy source 160, or energy storage system 170, and the term "power resources" should be understood to refer to any set, including any combination, of electrolyzer plant(s) 150, renewable energy source(s) 160, and/or energy storage system(s) 170.

Electrolyzer plant(s) 150 are illustrated as electrolyzer plants 150A, 150B, and 150N, indicating that hydrogen plant 110 may comprise any number N of electrolyzer plants 150, including one, two, three, four, five, ten, one hundred, or any other number. Similarly, renewable energy sources 160 are illustrated as renewable energy sources 160A, 160B, and 160M, indicating the hydrogen plant 100 may comprise any number M of renewable energy sources 160, including one, two, three, four, five, ten, one hundred, or any other number. In addition, while only a single energy storage system 170 is illustrated, hydrogen plant 100 may comprise any number of energy storage systems 170, including one, two, three, four, five, ten, one hundred, or any other number.

As used herein, a reference numeral with an appended letter will be used to refer to a specific component, whereas the same reference numeral without any appended letter will be used to refer collectively to a plurality of the component or to refer to a generic or arbitrary instance of the component. Thus, for example, the term "electrolyzer plants 150" refers collectively to electrolyzer plants 150A, 150B,..., and 150N, and the term "electrolyzer plant 150" refers to any single one of electrolyzer plants 150A, 150B,..., or 150N.

Energy management system (EMS) 140 may comprise, consist of, or be combined with a supervisory control and data acquisition (SCADA) system, which collects and analyzes real-time data to monitor and control hydrogen plant 110. Energy management system 140 may coordinate the dispatch of demand for hydrogen production by electrolyzer plant(s) 150, the dispatch of power generation by renewable energy source(s) 160, the dispatch of charging and/or discharging of energy stored in energy storage system 170, and/or the like. Energy management system 140 may also maintain a schedule of power interchange on tie line 130 between hydrogen plant 110 and local power grid 120. Energy management system 140 may operate hydrogen plant 110, according to the schedule, to deliver power to local power grid 120 during time periods with high renewable-energy generation (e.g., time periods with high solar insolation, high winds, etc.), and receive power from local power grid 120 during time periods with low renewable-energy generation (e.g., time periods with low solar insolation, no winds, etc.). In the event of an outage on tie line 130, hydrogen plant 110 may operate as a stand-alone system.

In an embodiment, energy management system 140 communicates with each power resource via one or more wired or wireless communication channels 180. For example, energy management system may communicate with a local controller 155 of each electrolyzer plant 150 (e.g., local controller 155A of electrolyzer plant 150A, local controller 155B of electrolyzer plant 150B,..., and/or local controller 155N of electrolyzer plant 150N), a local controller 165 of each renewable energy source 160 (e.g., local controller 165A of renewable energy source 160A, local controller 155B of renewable energy source 160B,..., and/or local controller 165M of renewable energy source 160M), and/or local controller 175 of each energy storage system 170. In particular, energy management system 140 may receive data from each local controller 155, 165, and/or 175 and send control commands to each local controller 155, 165, and/or 175, via communication channel(s) 180. As used herein, the term "local controller," without a subsequent reference numeral, should be understood to refer any one of local controllers 155, 165, or 175, and the term "local controllers," without a subsequent reference numeral, should be understood to refer to any set, including any combination, of local controller(s) 155, local controller(s) 165, and/or local controller(s) 175.

Each electrolyzer plant 150 may utilize electricity from renewable energy source(s) 160 to split water molecules into hydrogen and oxygen through electrolysis. This hydrogen may be stored, and subsequently used in a hydrogen fuel cell or other process to produce electricity. In other words, each electrolyzer plant 150 may store energy, produced by renewable energy source(s) 160, for future use. Electrolyzer plant(s) 150 may be used to continuously balance power supply and demand in real time. As used herein, the term "real time" or "real-time" should be understood to refer to events that occur simultaneously, as well as events that are temporally separated due to ordinary latencies in processing, communications, memory access, and/or the like.

Local controller 155 of each electrolyzer plant 150 may send data to energy management system 140. These data may comprise a current operating mode, a current status, the current value of one or more electrical parameters, a rate of hydrogen production, an amount of hydrogen production or storage, a power input, and/or the like. These data may be sent in real time, periodically (e.g., at the expiration of each of a plurality of time intervals), in response to polling from energy management system 140, and/or the like. Local controller 155 may also receive control commands from energy management system 140. These control commands may comprise a change in operating mode, a change in a rate or amount of hydrogen production, a change in power input, and/or the like. When receiving a control command from energy management system 140, local controller 155 may adjust operation of the respective electrolyzer plant 150 according to the control command.

Each renewable energy source 160 may produce electricity using a resource that is not depleted when used. For example, a renewable energy source 160 may comprise a photovoltaic system that produces solar power, a wind turbine that produces wind power, a hydroelectric dam that produces hydroelectric power, a wave energy converter that produces wave power, and/or the like. In an embodiment, renewable energy source(s) 160 comprise at least one hydrogen fuel cell that is configured to convert hydrogen, stored by electrolyzer plant(s) 150, back into electricity.

Local controller 165 of each renewable energy source 160 may send data to energy management system 140. These data may comprise a current operating mode, a current status, the current value of one or more electrical parameters, a rate of energy generation, an amount of energy generation, a power output, and/or the like. These data may be sent in real time, periodically (e.g., at the expiration of each of a plurality of time intervals), in response to polling from energy management system 140, and/or the like. Local controller 165 may also receive control commands from energy management system 140. These control commands may comprise a change in operating mode, a change in a rate or amount of energy generation, a change in power output, and/or the like. When receiving a control command from energy management system 140, local controller 165 may adjust operation of the respective renewable energy source 160 according to the control command.

Energy storage system 170 may comprise any system that is capable of storing and releasing energy. For example, energy storage system 170 may comprise a battery energy storage system (BESS) (e.g., comprising one or a plurality of battery cells), a thermal system, a mechanical system (e.g., flywheel), and/or the like. Regardless of the particular mechanism that is utilized, the storage of energy will be referred to herein as "charging," and the release of energy will be referred to herein as "discharging." In addition, the ratio or percentage of stored energy to total energy capacity of energy storage system 170 may be referred to herein as the "state of charge" of energy storage system 170.

Energy storage system 170 increases the capacity utilization of energy produced by renewable energy source(s) 160. In particular, the installed capacity of renewable energy source(s) 160 is often higher than the rated demand of electrolyzer plant(s) 150. In this case, the excess energy power (i.e., in excess of the demand of electrolyzer plant(s) 150), produced by renewable energy source(s) 160, may be used to charge energy storage system 170.

Energy storage system 170 may also be used to smooth the intermittent power generation of renewable energy source(s) 160. For example, in the event of a drastic drop in power generation by renewable energy source(s) 160 (e.g., resulting from a change in weather), energy storage system 170 may be discharged, such that the total power output by hydrogen plant 110 remains stable or decreases at a lower rate of change.

Local controller 175 of energy storage system 170 may send data to energy management system 140. These data may comprise a current operating mode, a current status, the current value of one or more electrical parameters (e.g., state of charge), a rate of charging and/or discharging, an amount of charging and/or discharging, and/or the like. These data may be sent in real time, periodically (e.g., at the expiration of each of a plurality of time intervals), in response to polling from energy management system 140, and/or the like. Local controller 175 may also receive control commands from energy management system 140. These control commands may comprise a change in operating mode, a change in the rate of charging and/or discharging, a change in the amount of charging and/or discharging, and/or the like. When receiving a control command from energy management system 140, local controller 175 may adjust operation of energy storage system 170 according to the control command.

Each of the power resources of hydrogen plant 110, including electrolyzer plant(s) 150, renewable energy source(s) 160, and/or energy storage system(s) 170, may be electrically coupled to an internal transmission network 190, so as to be interconnected to each other. In an alternative embodiment, energy storage system 170 may be implemented as a stand-alone facility. The power resources may be located near each other or spread across a wide geographical area. Internal transmission network 190 may be coupled to tie line 130, such that a power interchange is formed between hydrogen plant 110 and local power grid 120.

2. Example Processing System

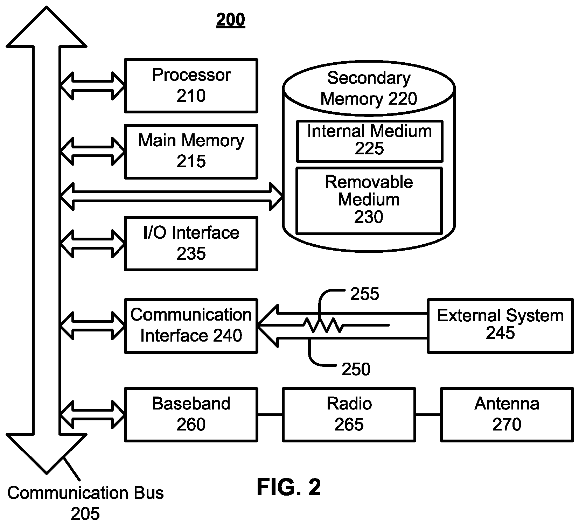

FIG. 2 illustrates an example processing system 200, by which one or more of the processes described herein may be executed, according to an embodiment. For example, system 200 may be used as or in conjunction with one or more of the processes, methods, or functions (e.g., to store and/or execute the software) described herein, and may represent components of energy management system 140, local controller(s) 155, 165, and/or 175, and/or other processing devices described herein. System 200 can be any processor-enabled device (e.g., server, personal computer, programmable logic controller (PLC), etc.) that is capable of wired or wireless data communication. Other processing systems and/or architectures may also be used, as will be clear to those skilled in the art.

System 200 may comprise one or more hardware processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digitalsignal processor), a subordinate processor (e.g., back-end processor), an additional microprocessor or controller for dual or multiple processor systems, and/or a coprocessor. Such auxiliary processors may be discrete processors or may be integrated with a main processor 210. Examples of processors which may be used with system 200 include, without limitation, any of the processors (e.g., Pentium™, Core i7™, Core i9™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Processor(s) 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 may comprise main memory 215. Main memory 215 provides storage of instructions and data for programs executing on processor 210, such as any of the software discussed herein. It should be understood that programs stored in the memory and executed by processor 210 may be written and/or compiled according to any suitable language, including without limitation C/C++, Java, JavaScript, Perl, Python, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may comprise secondary memory 220. Secondary memory 220 is a non-transitory computer-readable medium having computer-executable code and/or other data (e.g., any of the software disclosed herein) stored thereon. In this description, the term "computer-readable medium" is used to refer to any non-transitory computer-readable storage media used to provide computer-executable code and/or other data to or within system 200. The computer software stored on secondary memory 220 is read into main memory 215 for execution by processor 210. Secondary memory 220 may include, for example, semiconductor-based memory, such as programmable read-only memory (PROM), erasable programmable read-only memory (EPROM), electrically erasable read-only memory (EEPROM), and flash memory (block-oriented memory similar to EEPROM).

Secondary memory 220 may include an internal medium 225 and/or a removable medium 230. Internal medium 225 and removable medium 230 are read from and/or written to in any well-known manner. Internal medium 225 may comprise one or more hard disk drives, solid state drives, and/or the like. Removable storage medium 230 may be, for example, a magnetic tape drive, a compact disc (CD) drive, a digital versatile disc (DVD) drive, other optical drive, a flash memory drive, and/or the like.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing systems, cathode ray tubes (CRTs), plasma displays, lightemitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet computer, or other mobile device).

System 200 may comprise a communication interface 240. Communication interface 240 allows software to be transferred between system 200 and external devices (e.g. printers), networks, or other information sources. For example, computer-executable code and/or data may be transferred to system 200 from a network server via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Software transferred via communication interface 240 is generally in the form of electrical communication signals 255. These signals 255 may be provided to communication interface 240 via a communication channel 250 between communication interface 240 and an external system 245. In an embodiment, communication channel 250 may be a wired or wireless network, or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code is stored in main memory 215 and/or secondary memory 220. Computer-executable code can also be received from an external system 245 via communication interface 240 and stored in main memory 215 and/or secondary memory 220. Such computer-executable code, when executed, enable system 200 to perform the various functions of the disclosed embodiments as described elsewhere herein.

In an embodiment that is implemented using software, the software may be stored on a computer-readable medium and initially loaded into system 200 by way of removable medium 230, I/O interface 235, or communication interface 240. In such an embodiment, the software is loaded into system 200 in the form of electrical communication signals 255. The software, when executed by processor 210, preferably causes processor 210 to perform one or more of the processes described herein.

System 200 may comprise wireless communication components that facilitate wireless communication over a voice network and/or a data network. The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 265 to baseband system 260.

Baseband system 260 is communicatively coupled with processor(s) 210, which have access to memory 215 and 220. Thus, software can be received from baseband processor 260 and stored in main memory 210 or in secondary memory 220, or executed upon receipt. Such software, when executed, can enable system 200 to perform one or more of the processes described herein.

3. Control Process

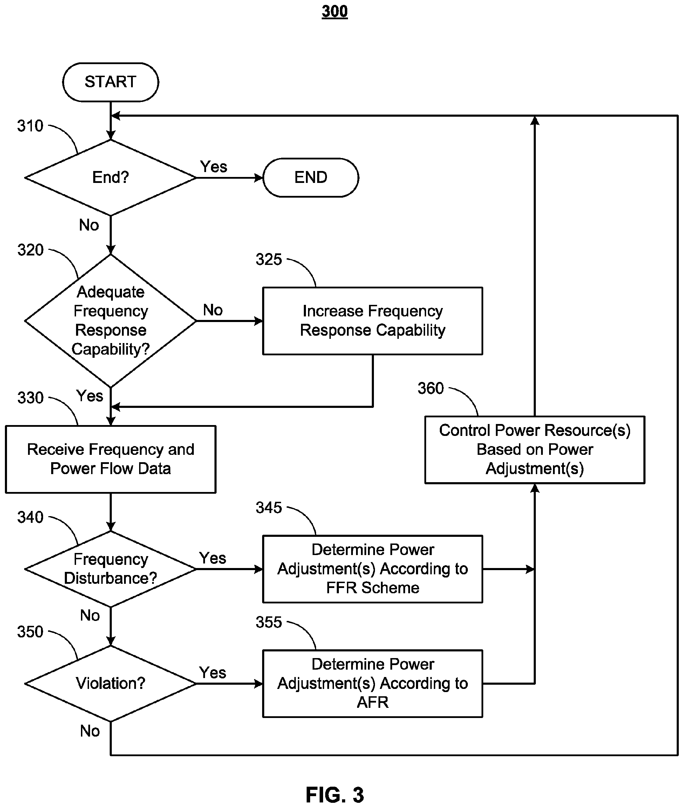

FIG. 3 illustrates a process 300 for balancing control of hydrogen plant 110, according to an embodiment. Process 300 may be implemented by energy management system 140, local controller 155, 165, and/or 175, or a combination of energy management system 140 and local controllers 155, 165, and/or 175, with a first subset of software modules, representing a first set of functions, implemented by energy management system 140 and a second subset of software modules, representing a second set of functions, implemented by local controllers 155, 165, and/or 175. While process 300 is illustrated with a certain arrangement and ordering of subprocesses, process 300 may be implemented with fewer, more, or different subprocesses and a different arrangement and/or ordering of subprocesses. In addition, it should be understood that any subprocess, which does not depend on the completion of another subprocess, may be executed before, after, or in parallel with that other independent subprocess, even if the subprocesses are described or illustrated in a particular order.

Subprocess 310 determines whether or not to end process 300. Process 300 may be executed for as long as hydrogen plant 110 is operational, in which case process 300 may not end until hydrogen plant 110 is shut down. Alternatively, process 300 may be toggled on and off manually (i.e., by a user operation) by an operator of hydrogen plant 110, or automatically (i.e., without user intervention) or semi-automatically (i.e., with user approval) by an autonomous system. When determining to end process 300 (i.e., "Yes" in subprocess 310), for example, because hydrogen plant 110 is shutting down or process 300 has been toggled off, process 300 ends. Otherwise, when not determining to end process 300 (i.e., "No" in subprocess 310), process 300 may proceed to subprocess 320.

Subprocess 320 may determine whether or not there is adequate frequency response capability in hydrogen plant 110. For example, subprocess 320 may determine that there is inadequate frequency response capability when there is insufficient hydrogen-production capacity or hydrogen storage in electrolyzer plant(s) 150, insufficient "headroom" or reserve capacity in renewable energy source(s) 160, and/or insufficient state of charge or capacity in energy storage system 170, to adequately respond to frequency deviations in system 100. Conversely, subprocess 320 may determine that there is adequate frequency response capability when there is sufficient hydrogen-production capacity or stored hydrogen in electrolyzer plant(s) 150, sufficient headroom or reserve capacity in renewable energy source(s) 160, and/or sufficient state of charge or capacity in energy storage system 170, to adequately respond to frequency deviations in system 100. For example, if there is not sufficient stored energy to inject power into system 100 when the frequency decreases below a lower limit or there is too much stored energy, such that there is no capacity to draw power out of system 100 when the frequency increases above an upper limit, subprocess 320 may determine that there is not adequate frequency response capability in hydrogen plant 110. Otherwise, subprocess 320 may determine that there is adequate frequency response capability in hydrogen plant 110. Energy management system 140 may continually estimate the frequency response capability of hydrogen plant 110 based on data received from the power resources (e.g., electrolyzer plant(s) 150, renewable energy source(s) 160, and energy storage system(s) 170) and/or other data sources (e.g., weather service), for one or more future time periods. When determining that there is not adequate frequency response capability in hydrogen plant 110 (i.e., "No" in subprocess 320), process 300 may proceed to subprocess 325. Otherwise, when determining that there is adequate frequency response capability in hydrogen plant 110 (i. e., "Yes" in subprocess 320), process 300 may proceed to subprocess 330.

Subprocess 325 may increase the frequency response capability of hydrogen plant 110 until the frequency response capability is adequate. For example, when there is not sufficient stored energy to inject power into system 100 when frequency decreases below a lower tolerance threshold, subprocess 325 may control electrolyzer plant(s) 150 to decrease hydrogen production, control renewable energy source(s) 160 to increase power generation (e.g., if reserve capacity is available), and/or control energy storage system(s) 170 to store more energy, for example, from power generated by renewable energy source(s) 160. Conversely, when there is too much stored energy, such that there is no capacity (e.g., too much stored energy) to draw power out of system 100 when the frequency increases above an upper tolerance threshold, subprocess 325 may control electrolyzer plant(s) 150 to increase hydrogen production, control renewable energy source(s) 160 to decrease power generation, and/or control energy storage system(s) 170 to discharge at least a portion of the stored energy into the system.

Subprocess 330 receives frequency data and/or power flow data. For example, subprocess 330 (e.g., implemented by energy management system 140) may monitor the system frequency within hydrogen plant 110, the frequency on tie line 130, the power interchange (e.g., magnitude and sign of power flow) through tie line 130, and/or the like. These data may be monitored in real time, continuously or periodically.

Subprocess 340 may determine whether or not a frequency disturbance has occurred. For example, subprocess 340 may detect any frequency disturbance in the frequency data, received in subprocess 330. A frequency disturbance is a large-scale transient (i.e., high rate of change) decrease or increase in the system frequency, due to a sudden change in power balance between power supply and power demand in hydrogen plant 110. A frequency disturbance may result from an event such as the loss of a maj or power-generation resource, such as a renewable energy source 160, the loss or rejection of a large load, such as an electrolyzer plant 160 or the disconnection of local power grid 120, and/or the like. The frequency disturbance may be detected as a rate of change of frequency that is above a predefined threshold. When detecting a frequency disturbance (i.e., "Yes" in subprocess 340), process 300 may proceed to subprocess 345. Otherwise, when not detecting a frequency disturbance (i.e., "No" in subprocess 340), process 300 may proceed to subprocess 350.

Subprocess 345 may determine the power adjustment(s) necessary for controlling the power balance according to a fast frequency response (FFR) scheme. In particular, subprocess 345 may, in response to detecting the frequency disturbance in subprocess 340, for each of at least a subset of the plurality of power resources in hydrogen plant 110, determine a power adjustment for that power resource according to the FFR scheme. The subset may comprise at least one electrolyzer plant 150, at least one renewable energy source 160, and/or at least one energy storage system 170, electrically connected to each other by internal transmission network 190. The FFR scheme may enable fast and adequate frequency responses by integrating fast frequency responses or synthetic inertial responses with frequency droop responses of the power resources, to stabilize system frequency following a contingency condition, such as a sudden generation loss or load rejection. In an embodiment, either a centralized FFR scheme or a distributed FFR scheme may be used. Each of these FFR schemes are discussed in greater detail elsewhere herein. In either case, a power adjustment will be determined for each of at least a subset of the power resources. The determined power adjustment(s) may be provided to subprocess 360.

Subprocess 350 may determine whether or not a violation of one or more system parameters has occurred. For example, subprocess 350 may detect a violation in frequency or power flow on tie line 130. A violation in frequency may be defined as the frequency in hydrogen plant 110, monitored in subprocess 330, deviating from an allowable range of tolerance around the nominal frequency (e.g., 50 Hz or 60 Hz in the United States). This allowable range, also referred to herein as a "dead band," is typically plus or minus (+/-) 20-50 mHz around the nominal frequency. When the measured frequency is above or below the dead band, subprocess 350 may detect a violation. Similarly, a violation in power flow may be defined as the power flow on tie line 130, monitored in subprocess 330, deviating from an allowable range of tolerance around a scheduled power flow. When the measured power flow is above or below this acceptable range, subprocess 350 may detect a violation. When detecting a violation (i.e., "Yes" in subprocess 350), process 300 may proceed to subprocess 355. Otherwise, when not detecting a violation (i.e., "No" in subprocess 350), process 300 may return to subprocess 310.

Subprocess 355 may determine the power adjustment(s) necessary for controlling the power balance according to automatic frequency regulation (AFR). In particular, subprocess 355 may, in response to detecting a violation, for each of at least a subset of the plurality of power resources in hydrogen plant 110, determine a power adjustment for that power resource according to automatic frequency regulation, which will be discussed in greater detail elsewhere herein. The subset may comprise at least one electrolyzer plant 150, at least one renewable energy source 160, and/or at least one energy storage system 170, electrically connected to each other by internal transmission network 190. The determined power adjustment(s) may be provided to subprocess 360.

The power adjustment for a power resource may represent an amount of electrical power to be consumed or output by that power resource. In the context of electrolyzer plant 150, the power adjustment may represent an amount of electrical power to be converted into hydrogen. In the context of renewable energy source 160, the power adjustment may represent an amount of electrical power to be output by renewable energy source 160. In the context of energy storage system 170, the power adjustment may represent an amount of electrical power with which to charge energy storage system 170 or an amount of electrical power to be discharged from energy storage system 170.

Subprocess 360 may control the power resource(s) based on the determined power adjustment(s), to restore or maintain power balance. In particular, for each of at least a subset of the plurality of power resources in hydrogen plant 110, for which a power adjustment has been determined in either subprocess 345 or 355, subprocess 360 may control the power resource based on the power adjustment determined for that power resource. In the context of electrolyzer plant 150, the control may comprise increasing or decreasing an amount of electrical power to be converted into hydrogen. In the context of renewable energy source 160, the control may comprise increasing or decreasing an amount of electrical power to be output by renewable energy source 160. In the context of energy storage system 170, the control may comprise increasing or decreasing charging of energy storage system 170, increasing or decreasing discharging of energy storage system 170, or the like. Following the control of the impacted power resource(s), subprocess 360 may return to subprocess 310.

In the event that subprocess 360 is implemented by energy management system 140, the control may comprise sending a control command to the local controller (e.g., 155, 165, or 175) of each power resource for which a power adjustment has been determined. In the event that subprocess 360 is implemented by local controllers, the control is initiated by each local controller. In either case, the control of a power resource may comprise the local controller of that power resource controlling an inverter (e.g., to change the power output) or rectifier (e.g., to change the power input) of the respective power resource according to the determined power adjustment for that power resource. This control may comprise the local controller sending a dispatch signal, representing the determined power adjustment, to a controller of the inverter or rectifier of the respective power resource. Alternatively, the local controller of a respective power resource may be one in the same as the controller of the inverter and/or rectifier of that power resource.

Balancing control according to process 300 ensures that the power supply and the power demand in system 100 are always balanced within an allowable range, thereby maintaining safe and reliable operation of system 100. In a remote area, hydrogen plant 110 may be responsible for controlling the power balance, since the installed capacity of hydrogen plant 110 is typically significantly higher than the total resource capacity of power grid 120, rendering local power grid 120 weak. In this case, local power grid 120 only provides a minor contribution to mitigating fluctuations in system frequency and maintaining stability in the system frequency under severe frequency disturbances.

In process 300, the balancing control comprises two main control strategies: (i) fast frequency response under contingency operating conditions; and (ii) automatic frequency regulation under normal operating conditions. Fast frequency response is provided in the event of abnormal deviations in system frequency or severe frequency disturbances, by utilizing the available adjustment capacities of the power resources, to stop increases or decreases in the frequency and stabilize the frequency at a secure steady-state value. Under normal operating conditions, hydrogen plant 110 operates based on a schedule of hydrogen production by electrolyzer plant(s) 150, power generation by renewable energy source(s) 160, and/or power interchange on tie line 130. In this case, automatic frequency regulation provides optimal dispatch adjustments for hydrogen production by electrolyzer plant(s) 150 and/or power generation by renewable energy source(s) 160, to maintain the frequency and power flow on tie line 130 within an allowable range against highly variable renewable power generation. Automatic frequency regulation may also be performed during post-contingency operating conditions, to assist in the restoration of the system frequency to the desired value.

In a preferred embodiment, process 300 includes both fast frequency regulation, via subprocesses 340 and 345, and automatic frequency regulation, via subprocesses 350 and 355. However, in an alternative embodiment, process 300 may comprise only fast frequency regulation without automatic frequency regulation, or only automatic frequency regulation without fast frequency regulation. In the former case, subprocesses 350 and 355 may be omitted, and the "No" branch of subprocess 340 may return to subprocess 310. In the latter case, subprocesses 340 and 345 may be omitted, and process 300 may proceed directly from subprocess 330 to subprocess 350.

### 4. Centralized FFR Scheme

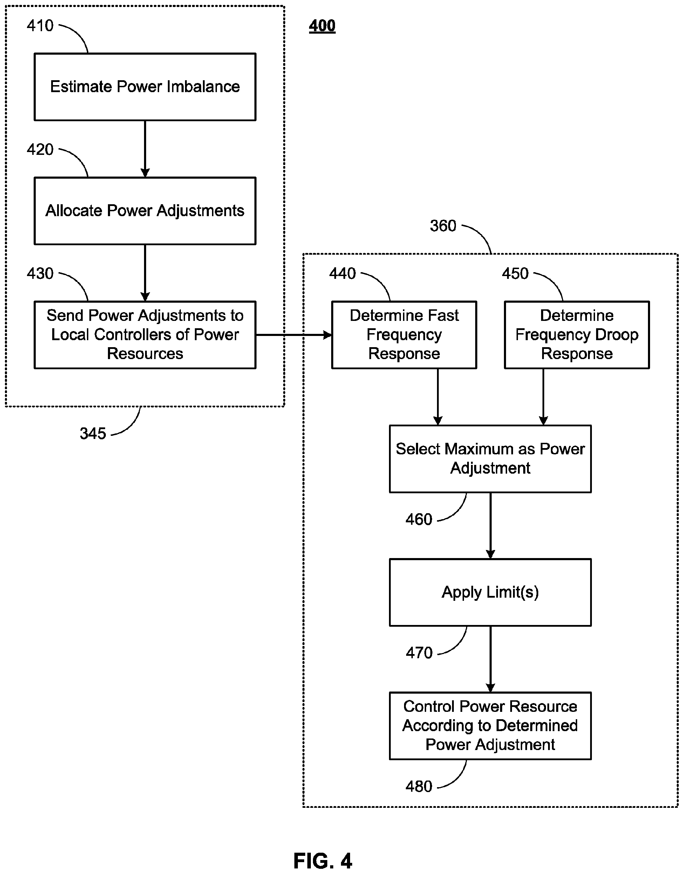

FIG. 4 illustrates a centralized FFR scheme 400, according to an embodiment. In centralized FFR scheme 400, the determination of power adjustment(s) in subprocess 345 is implemented centrally by energy management system 140, whereas the control based on those power adjustment(s) in subprocess 360 is implemented locally by local controller(s) 155, 165, and/or 175. In an embodiment, subprocess 345 comprises subprocesses 410, 420, and 430, and subprocess 360 comprises subprocesses 440, 450, 460, 470, and 480.

Centralized FFR scheme 400 may be performed over a time period, in real time, to adjust the power input or output at each power resource (e.g., electrolyzer plant(s) 150, renewable energy source(s) 160, and/or energy storage system(s) 170) to which a power adjustment has been allocated. In other words, each of subprocess 345, including subprocesses 410-430, and/or subprocess 360, including subprocesses 440-480, may be executed continuously or iteratively until the frequency disturbance has been eliminated (e.g., the frequency has stabilized within an allowable range).

Subprocess 410, implemented by energy management system 140, may estimate the power imbalance in hydrogen plant 110. It should be understood that the power imbalance represents a difference between total power supply and total power demand within hydrogen plant 110.

Subprocess 420, implemented by energy management system 140, may allocate a power adjustment to each of at least a subset of power resources based on the power imbalance estimated in subprocess 410. These allocated power adjustments may represent the optimal allocation of power adjustments between the various power resources.

Subprocess 430, implemented by energy management system 140, may send the power adjustment(s), allocated in subprocess 420, to the local controller of each respective power resource being adjusted. For example, a power adjustment allocated to an electrolyzer plant 150 may be sent to local controller 155 of that electrolyzer plant 150, a power adjustment allocated to a renewable energy source 160 may be sent to local controller 165 of that renewable energy source 160, and a power adjustment allocated to an energy storage system 170 may be sent to local controller 175 of that energy storage system 170. The power adjustments may be sent by energy management system 140 to the respective controllers over communication channel(s) 180 as a control command. Preferably, the communication delay between energy management system 140 and each local controller is less than 300 milliseconds, to ensure a fast response.

Subprocess 440, implemented by the local controller of each power resource to which a power adjustment has been allocated, may determine the fast frequency response for the respective power resource, based on the power adjustment sent by and received from energy management system 140. In particular, the fast frequency response may comprise or consist of the power adjustment in the control command received from energy management system 140, or otherwise be derived from the power adjustment in the control command received from energy management system 140.

Subprocess 450, implemented by the local controller of each power resource to which a power adjustment has been allocated, may determine the frequency droop response for the respective power resource. In particular, the frequency droop response may be activated and determined based on local frequency measurements at the respective power resource. Subprocess 450 may calculate a deviation of the local frequency at the respective power resource from a reference frequency (e.g., representing the nominal frequency of the system), and determine the frequency droop response based on that deviation. Notably, frequency droop response is relatively slow compared to fast frequency response, but tends to be more accurate than fast frequency response.

Subprocess 460, implemented by the local controller of each power resource to which a power adjustment has been allocated, may select the maximum of the fast frequency response, determined by subprocess 440, and the frequency droop response, determined by subprocess 450, as the power adjustment for the respective power resource. In other words, the maximum value of the power adjustment, as determined by both the fast frequency response and the frequency droop response, is selected.

Subprocess 470, implemented by the local controller of each power resource to which a power adjustment has been allocated, may apply one or more limits to the maximum value of the power adjustment that was selected from the fast frequency response and the frequency droop response in subprocess 460. In other words, the maximum of the fast frequency response and the frequency droop response is subject to one or more limits. In an embodiment, the limit(s) comprise a first limit on a rate of change in power, and/or a second limit on a frequency response capability. The first limit on the rate of change in power represents a physical rate limit of the power resource, where the power resource is not physically capable of increasing or decreasing power faster than a certain rate of change. The second limit on the frequency response capability represents a physical magnitude limit of the power resource, where the power resource is not physically capable of increasing or decreasing power beyond a certain value. In other words, the first limit constrains the rate of change in the power adjustments, and the second limit constrains the magnitude of change of the power adjustments.

Subprocess 480, implemented by the local controller of each power resource to which a power adjustment has been allocated, may control the respective power resource according to the determined power adjustment, as selected in subprocess 460 and limited in subprocess 470. In particular, the local controller may control an inverter (e.g., to change the power output) or rectifier (e.g., to change the power input) of the respective power resource according to the determined power adjustment. This control may comprise the local controller sending a dispatch signal, representing the determined power adjustment, to a controller of the inverter or rectifier of the respective power resource. Alternatively, the local controller of a respective power resource may be one in the same as the controller of the inverter and/or rectifier of that power resource.

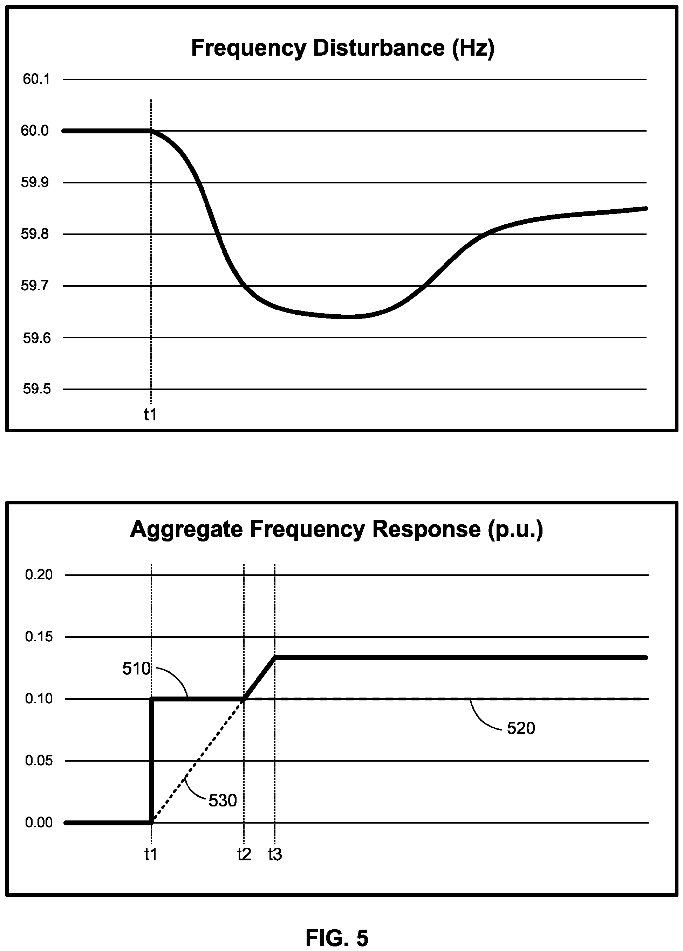

FIG. 5 illustrates a frequency disturbance (upper plot) and the frequency response of process 400 (lower plot), according to an embodiment. The upper plot depicts the system frequency (in hertz) over a time period, whereas the lower plot depicts the aggregate frequency response 510 (in per-unit) over the same time period. It should be understood that aggregate frequency response 510 is an aggregation of the fast frequency response (FFR) 520 of subprocess 440 and the frequency droop response (FDR) 530 of subprocess 450, subject to one or more limits.

As illustrated, a frequency disturbance is detected at time t1, triggering an aggregate frequency response 510. Fast frequency response 520 is a step increase from 0.00 to 0.10 perunits at time t1, whereas frequency droop response 530 is a ramped increase from time t1 to time t3. Initially, from time t1 to time t2, fast frequency response 520 is the maximum. However, at time t2, frequency droop response 530 becomes the maximum. As a result, aggregate frequency response 510 becomes a step-to-ramp-like change. As discussed elsewhere herein, aggregate frequency response 510 may also be subject to one or more limits, reflecting the natural dynamics and frequency response capability of the respective power source. Advantageously, this centralized FFR scheme does not overestimate the power imbalance and compensates the actual power imbalance using a closed-loop frequency droop response 530.

5. Distributed FFR Scheme

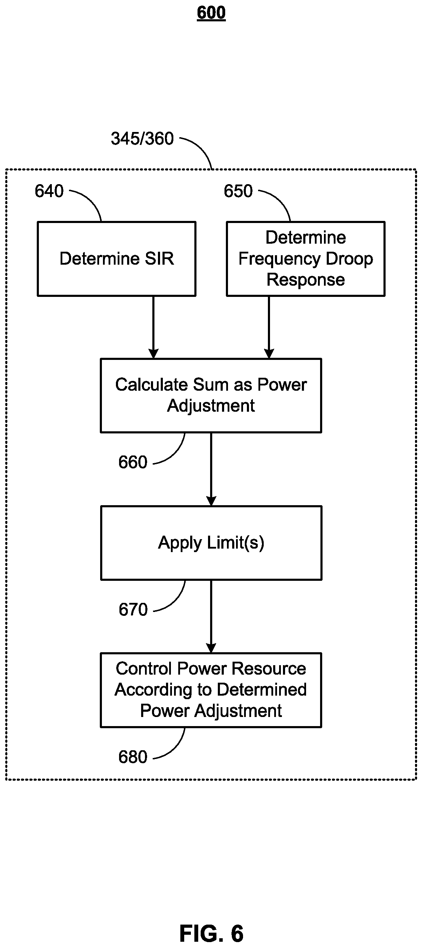

FIG. 6 illustrates a distributed FFR scheme 600, according to an embodiment. In distributed FFR scheme 600, the determination of power adjustment(s) in subprocess 345 and the control based on those power adjustment(s) in subprocess 360 are implemented locally by local controller(s) 155, 165, and/or 175. In other words, the frequency response is implemented entirely by the local controller(s), with no role played by energy management system 140. Each local controller may activate a local frequency response when the system frequency or the derivative of the system frequency (i.e., rate of change of frequency) deviates outside an allowable range (e.g., the dead band).

Distributed FFR scheme 600 may be performed over a time period, in real time, to adjust the power input or output at each power resource (e.g., electrolyzer plant(s) 150, renewable energy source(s) 160, and/or energy storage system(s) 170), in response to a frequency disturbance. In other words, the combination of subprocesses 345 and 360, including subprocesses 640-680, may be executed continuously or iteratively by each local controller of each power resource, to determine a power adjustment for the respective power resource based on a synthetic inertial response (SIR) and a frequency droop response, until the frequency disturbance has been eliminated (e.g., the frequency has stabilized within an allowable range).

Subprocess 640 may determine the synthetic inertial response for the respective power resource. In particular, the respective local controller (e.g., 155, 165, or 175) may activate a local synthetic inertial response for the respective power resource. Synthetic inertial response is defined as the equivalent active power injected into the system during an under-frequency event. SIR control essentially mimics the inertia of synchronous machines and, for example, controls the power resource proportional to the rate of change of frequency. During an under-frequency event, the synthetic inertial response will increase quickly after the disturbance, and then decrease gradually as the rate of change of frequency decreases. When the system frequency reaches its nadir, the synthetic inertial response will reduce to zero. The implementation of the synthetic inertial response may be based on grid-forming control strategies.

In an embodiment, subprocess 640 utilizes extended synthetic inertial response. Extended synthetic inertial response reduces the rate of decrease in the synthetic inertial response after the system frequency reaches its maximum. Extended synthetic inertial response may be beneficial when local power grid 120 has low inertia, since it reduces the frequency decay and enables the frequency droop response to occur.

Subprocess 650 may determine the frequency droop response for the respective power resource. Subprocess 650 may be similar or identical to subprocess 450, and therefore, will not be redundantly described herein. Rather, it should be understood that any description of subprocess 450 applies equally to subprocess 650, and vice versa.

Subprocess 660 may calculate the sum of the synthetic inertial response, determined by subprocess 640, and the frequency droop response, determined by subprocess 650, as the power adjustment for the respective power resource. In other words, the frequency droop response is added to the synthetic inertial response, which may potentially be an extended synthetic inertial response, to determine the power adjustment for the respective power resource.

Subprocess 670 may apply one or more limits to the sum of the synthetic inertial response and the frequency droop response, calculated in subprocess 660. In other words, the sum of the synthetic inertial response and the frequency droop response may be subject to one or more limits. In an embodiment, the limit(s) comprise the first limit on a rate of change in power, and/or the second limit on a frequency response capability. Subprocess 670 may be similar or identical to subprocess 470, and therefore, will not be redundantly described herein. Rather, it should be understood that any description of subprocess 470 applies equally to subprocess 670, and vice versa.

Subprocess 680 may control the respective power resource according to the determined power adjustment, as calculated in subprocess 660 and limited in subprocess 670. Subprocess 680 may be similar or identical to subprocess 480, and therefore, will not be redundantly described herein. Rather, it should be understood that any description of subprocess 480 applies equally to subprocess 680, and vice versa.

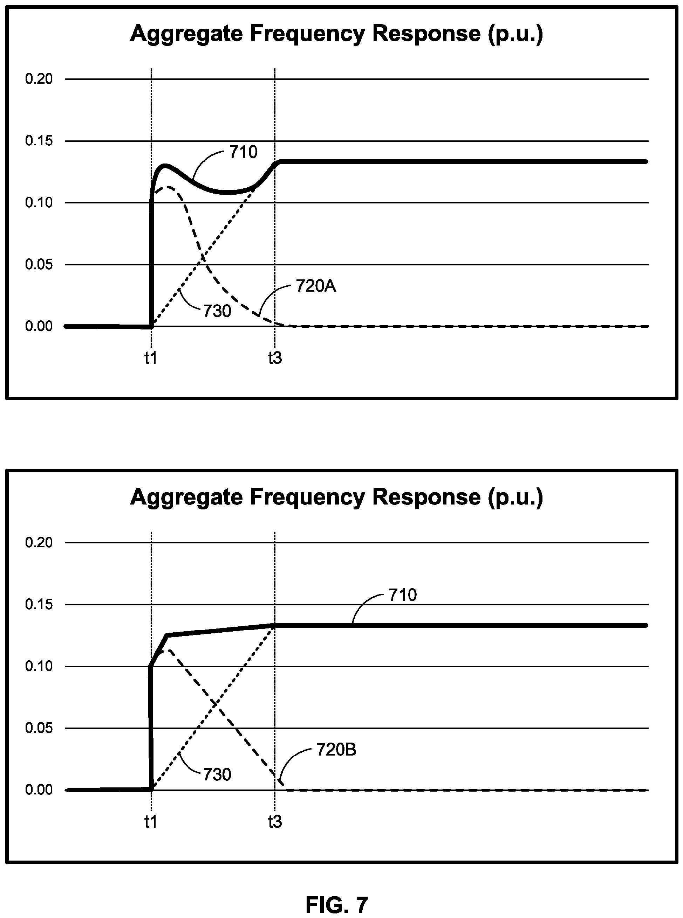

FIG. 7 illustrates the frequency response of process 600, during an under-frequency event, according to an embodiment. The upper plot illustrates an example of the frequency response when process 600 utilizes normal synthetic inertial response, whereas the lower plot illustrates an example of the frequency response when process 600 utilizes extended synthetic inertial response. Both plots assume the same frequency disturbance as illustrated in FIG. 5, and depict the aggregate frequency response 710 (in per-unit) over the same time period as the frequency disturbance. It should be understood that aggregate frequency response 710 is an aggregation of the synthetic inertial response (SIR) 720 of subprocess 640 and the frequency droop response (FDR) 730 of subprocess 650, subject to one or more limits.

As illustrated, a frequency disturbance is detected at time t1, triggering an aggregate frequency response 710. Synthetic inertial response 720 increases drastically, and then gradually decreases. Extended synthetic inertial response 720B decreases more slowly than normal synthetic inertial response 720A, providing a more stable aggregate frequency response 710. As discussed elsewhere herein, aggregate frequency response 710 may also be subject to one or more limits, reflecting the natural dynamics and frequency response capability of the respective power source.

During an under-frequency event, a fast frequency response can be supported by discharging energy from energy storage system 170, releasing kinetic energy stored in the rotors of wind turbines of a renewable energy source 160, quickly ramping up solar generation by a photovoltaic system of a renewable energy source 160 (e.g., if not operating in Maximum Power Point Tracking (MPPT) mode), and/or the like. An advanced electrolyzer plant 150 may also support a fast frequency response. For example, the maximum ramp rate range, for proton exchange membrane (PEM) electrolysis technology, is up to 10% per second. To maintain frequency stability, energy management system 140 may schedule operations so as to reserve adequate capabilities (e.g., in subprocess 325) for fast frequency response based on the configurations of the power resources and respective ramping limits.

## 6. Frequency Droop Response

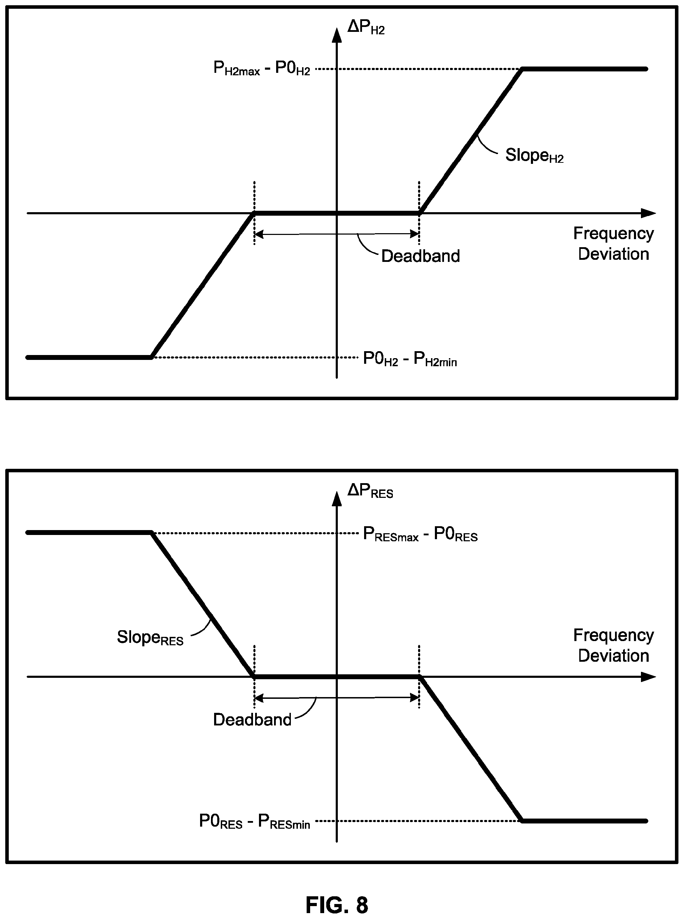

FIG. 8 illustrates the frequency droop control characteristics of active power for an electrolyzer plant 150 (upper plot) and renewable energy source 160 (lower plot), according to an example. Electrolyzer plant 150 can provide over-frequency response by increasing its demand by an amount up to the difference between the maximum power-demand setpoint $P_{H2max}$ and the pre-contingency power-demand setpoint $P0_{H2}$, and provide under-frequency response by decreasing its demand by an amount up to the difference between the pre-contingency power-demand setpoint $P0_{H2}$ and the minimum power-demand setpoint $P_{H2min}$. Similarly, renewable energy source 160 can provide under-frequency response by increasing its power generation by an amount up to the difference between the maximum power-generation setpoint $P_{RESmax}$ and the pre-contingency power-generation setpoint $P0_{RES}$, and provide over-frequency response by decreasing its power generation by an amount up to the difference between the pre-contingency power-generation setpoint $P0_{RES}$ and the minimum power-generation setpoint $P_{RESmin}$. $Slope_{H2}$ represents the demand ramp rate of electrolyzer plant 150, and $Slope_{RES}$ represents the generation ramp rate of renewable energy source 160. Energy storage system 170 may also provide frequency droop response according to the active-power frequency droop control characteristics defined by its pre-contingency operating point, charging or discharging ramp rate, and storage capability limits.

Frequency droop control is initiated when the frequency deviates outside the specified dead band, which is typically +/- 20-50 mHz around the nominal frequency. Depending on the operating conditions of hydrogen plant 110, droop-based frequency responses can be provided by electrolyzer plant(s) 150, renewable energy source(s) 160, and/or energy storage unit(s) 170. For example, when a renewable energy source 160 operates in an MPPT mode (i.e., $P0_{RES} = P_{RESmax}$), that renewable energy source 160 has no capacity to increase its power output during an under-frequency event. Similarly, when an electrolyzer plant 150 operates at a maximum hydrogen-production level (i.e., $P0_{H2} = P_{H2max}$), the electrolyzer plant 150 has no capacity to increase its demand during an over-frequency event. Different slope parameters (e.g., $Slope_{H2}$, $Slope_{RES}$) may be set for each power resource (e.g., electrolyzer plant 150, renewable energy source 160, and energy storage system 170). For example, the steady-state and dynamic characteristics of photovoltaic systems and wind farms are different. In addition, a large-scale hydrogen plant 110 may have different types of electrolyzer plants 150, from different manufacturers, with different steady-state and dynamic characteristics.

### 7. Automatic Frequency Regulation

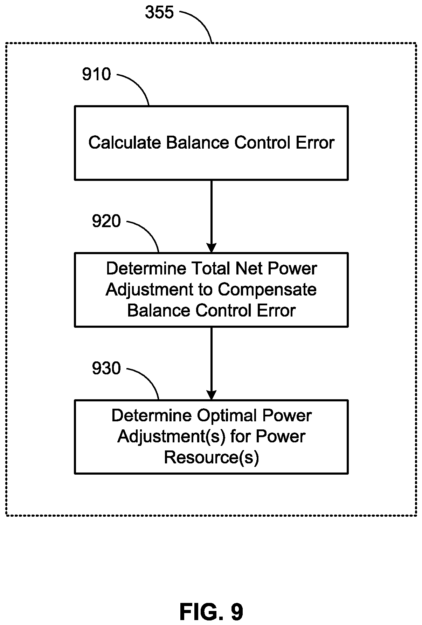

FIG. 9 illustrates an example of automatic frequency regulation (AFR) in subprocess 355, according to an embodiment. The automatic frequency regulation may be implemented by energy management system 140. In an embodiment, the automatic frequency regulation continuously monitors the operating conditions of hydrogen plant 110, and optimizes power adjustments for the power resources, to maintain the system frequency and power flow on tie line 130 within allowable ranges, against the high uncertainty in power generation by renewable energy source(s) 160.

The automatic frequency regulation may be performed at the expiration of each of a plurality of time intervals. The length of the time intervals may be seconds to tens of seconds, and may vary based on current weather conditions.

Subprocess 910 may calculate or otherwise determines a balance control error. The balance control error may be calculated based on the data received in subprocess 330, which may comprise the measured system frequency and the measured power flow on tie line 130, one or more operating parameters of one or more of the power resources, and/or the like. The balance control error may represent the difference or mismatch between power supply and power demand in hydrogen plant 110.

In an embodiment, the balance control error ($BCE$), which may be expressed in megawatts (MW), is calculated as:

$$BCE = (TIA - TIS) - 10B(FA - FS)$$

wherein $TIA$ is an actual power interchange on tie line 130, $TIS$ is a scheduled power interchange on tie line 130, $B$ is a bias, $FA$ is an actual frequency, and $FS$ is a scheduled or nominal frequency. The value of the actual or scheduled power interchange is positive when the power flow is from hydrogen plant 110 to local power grid 120, and is negative when the power flow is from local power grid 120 to hydrogen plant 110. Scheduled or nominal frequency $FS$ is normally 50 Hz or 60 Hz, depending on the geographical region in which local power grid 120 is located.

Bias B may be a frequency bias that comprises a negative number, expressed in megawatts per 0.1 hertz (i.e., MW/0.1 Hz). Bias $B$ is multiplied by 10 to convert the bias $B$ to megawatts per hertz (i.e., MW/Hz). Bias B should be statically or dynamically determined according to the natural frequency response characteristics of hydrogen plant 110 or system 100.

Subprocess 920 may determine a total net power adjustment to compensate the balance control error that was determined in subprocess 910. During normal operations of hydrogen plant 110, it is common to have small mismatches between power supply and power demand. Thus, the actual frequency $FA$ may vary continuously around the scheduled or nominal frequency $FS$ (e.g., 50 Hz or 60 Hz), and the actual power interchange $TIA$ on tie line 130 may vary around the scheduled power interchange $TIS$ on tie line 130. When the balance control error deviates from an allowable range, the automatic frequency regulation determines a total net power adjustment necessary to compensate the balance control error, such that the system frequency is returned to the dead band around scheduled or nominal frequency $FS$ (e.g., +/- 20-50 mHz).

Subprocess 930 may determine an optimal adjustment for each of at least a subset of the power resources (e.g., electrolyzer plant 150, renewable energy source 160, and/or energy storage system 170), based on the balance control error determined in subprocess 910. In particular, subprocess 930 may determine the optimal allocation of the total net power adjustment, determined in subprocess 920, to each of at least a subset of the power resources.

In an embodiment, the optimal allocations are determined by optimizing:

$$\Delta P = \sum_{i=1}^{m} \Delta P_{RES_i} - \sum_{j=1}^{n} \Delta P_{H2_j} + \Delta P_{ES}$$

wherein $\Delta P$ is the total net power adjustment, determined in subprocess 920, $m$ is the number of renewable energy source(s) 160 and $i$ is an index into the set of renewable energy source(s) 160, $n$ is the number of electrolyzer plant(s) 150 and $j$ is an index into the set of electrolyzer

plant(s) 150, $\Delta P_{RES_i}$ is the power adjustment allocated to the $i$-th renewable energy source 160, $\Delta P_{H2j}$ is the power adjustment allocated to the $j$-th electrolyzer plant 150, and $\Delta P_{ES}$ is the power adjustment allocated to energy storage system 170.

Notably, the power adjustments for electrolyzer plant(s) 150 and renewable energy source(s) 160 have opposite signs. For example, if the determined value of the balance control error is positive, the power generation of renewable energy source(s) 160 should be increased (i.e., positive values) and the hydrogen-production demand of electrolyzer plant(s) 150 should be decreased (i.e., negative values).

Any suitable optimization algorithm may be used to optimize the allocations of total net power adjustment $\Delta P$. The optimization algorithm may be based on predefined adjustment coefficients for each of the power resources, and/or be formulated to prioritize the power adjustments for different power resources based on the actual operating conditions of system 100. For example, if balance control error $BCE$ violates an upper limit of an allowable range, the optimization algorithm may prioritize an increase to hydrogen production by electrolyzer plant(s) 150 and/or charging of energy storage system 170, and if necessary, decrease power generation by renewable energy source(s) 160, in the optimal allocations. Thus, when the balance control error violates the upper limit, the optimal allocation may comprise one or more of increasing production of hydrogen by at least one electrolyzer plant 150, charging at least one energy storage system 170, or reducing power generation by at least one renewable energy source 160. Conversely, if balance control error $BCE$ violates a lower limit of the allowable range, the optimization algorithm may prioritize increasing power generation by renewable energy source(s) 160 and/or discharging of energy storage system 170, and if necessary, decrease hydrogen production by electrolyzer plant(s) 150. Thus, when the balance control error violates the lower limit, the optimal allocation may comprise one or more of reducing production of hydrogen by at least one electrolyzer plant 150, discharging at least one energy storage system 170, or increasing power generation by at least one renewable energy source 160. It should be understood that, when the balance control error is within the allowable range, no power adjustments are needed, such that any dispatch commands may remain unchanged.

8. Example Application

A hydrogen plant 110, implementing the disclosed balancing control (e.g., of process 300), is able to quickly mitigate power imbalances between power demand and power supply within system 100, under both contingency conditions and normal conditions. Advantageously, this enables hydrogen plant 110 to reliably support the secure and economic operation of local power grid 120, which may be a weak power grid in a geographically remote area.

Benefits to local power grid 120 of such balancing control may include, without limitation, a green, low-cost power supply, the provision of operating reserves, fast active frequency support from hydrogen plant 110 to maintain a constant system frequency, and simple integration of economic active dispatch strategies through the optimized designs of the FFR scheme and automatic frequency regulation. In addition, the disclosed embodiments are extensible to automatic voltage control schemes (e.g., reactive provision) for voltage regulation of the terminals of tie line 130 (i.e., pilot nodes) and hydrogen plant 110.

It is generally contemplated that disclosed embodiments would be used for a large-scale (e.g., gigawatt-scale) green-hydrogen plant 110 in a geographically remote area, where balancing control is critical to ensure the stable operation of the green-hydrogen plant 110 and local power grid 120. Process 300 may be included in the design of the green-hydrogen plant 110 and the grid-connection requirements. For example, process 300 may be implemented in energy management system 140 (e.g., EMS/SCADA) of green-hydrogen plant 110 and/or local controllers 155, 165, and/or 175 of the individual power resources. If the centralized FFR scheme is adopted, communication channel(s) 180 may be designed for high-speed communications between energy management system 140 and local controllers 155, 165, and/or 175 of the power resources. It should be understood that process 300 may be scaled for any size hydrogen plant 110.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

**Claims**

1.  A method of controlling a hydrogen plant, the method comprising using at least one hardware processor to:

    monitor system frequency within the hydrogen plant;
    detect a frequency disturbance in the monitored system frequency; and
    in response to detecting the frequency disturbance, for each of at least a first subset of a plurality of power resources in the hydrogen plant,

    determine a power adjustment for the power resource according to a fast frequency response, FFR, scheme, and
    control the power resource based on the determined power adjustment.

2.  The method of Claim 1, wherein the plurality of power resources comprises at least one electrolyzer plant, at least one renewable energy source, and at least one energy storage system, electrically connected to each other by an internal transmission network.

3.  The method of any one of the preceding claims, wherein the FFR scheme comprises:

    by a centralized energy management system of the hydrogen plant, estimating a power imbalance; and
    allocating power adjustments to each of the at least a first subset of power resources based on the estimated power imbalance.

4.  The method of Claim 3, wherein controlling the power resource based on the determined power adjustment comprises, by a local controller of the power resource, over a time period, in real time:

    determining a fast frequency response for that power resource;

    determining a frequency droop response for that power resource; and
    selecting a maximum of the fast frequency response and the frequency droop response as the power adjustment for that power resource.

5.  The method of Claim 4, wherein the maximum of the fast frequency response and the frequency droop response is subject to one or more limits, and preferably
    wherein the one or more limits comprise a first limit on a rate of change in power, and a second limit on a frequency response capability.

6.  The method of any one of the preceding claims, wherein the FFR scheme comprises, by a local controller of each of the at least a first subset of power resources, determining the power adjustment for that power resource based on a synthetic inertial response and a frequency droop response for that power resource.

7.  The method of Claim 6, wherein determining the power adjustment for each power resource comprises, over a time period, in real time:

    determining the synthetic inertial response for that power resource;
    determining the frequency droop response for that power resource; and
    calculating a sum of the synthetic inertial response and the frequency droop response as the power adjustment for that power resource, and preferably
    wherein the sum of the synthetic inertial response and the frequency droop response is subject to one or more limits, and preferably
    wherein the one or more limits comprise a first limit on a rate of change in power, and a second limit on a frequency response capability.

8.  The method of any one of the preceding claims, wherein the hydrogen plant is electrically connected to a local power grid by a tie line.

9.  The method of Claim 8, further comprising using the at least one hardware processor to:

    detect a violation in frequency or power flow on the tie line; and
    in response to detecting the violation, for each of at least a second subset of the plurality of power resources,

    determine a power adjustment for the power resource according to automatic frequency regulation, and
    control the power resource based on the determined power adjustment.

10. The method of Claim 9, wherein the automatic frequency regulation comprises:

calculating a balance control error; and determining an optimal adjustment for each of the at least a second subset of power resources based on the balance control error.

11. The method of Claim 10, wherein the balance control error, BCE, is calculated as:

$$BCE = (TIA - TIS) - 10B(FA - FS)$$

wherein *TIA* is an actual power interchange on the tie line, *TIS* is a scheduled power interchange on the tie line, *B* is a bias, *FA* is an actual frequency, and *FS* is a scheduled or nominal frequency.

12. The method of either Claim 10 or 11, wherein determining the optimal adjustment comprises:

determining a total net power adjustment to compensate the balance control error; and determining an optimal allocation of the total net power adjustment to each of the at least a second subset of power resources, and preferably wherein the at least a second subset of power resources comprises at least one electrolyzer plant, at least one renewable energy source, and at least one energy storage system.

13. The method of Claim 12, wherein determining the optimal allocation comprises:

when the balance control error violates an upper limit, one or more of increasing production of hydrogen by the at least one electrolyzer plant, charging the at least one energy storage system, or reducing power generation by the at least one renewable energy source; and when the balance control error violates a lower limit, one or more of reducing production of hydrogen by the at least one electrolyzer plant, discharging the at least one energy storage system, or increasing power generation by the at least one renewable energy source.

14. A system comprising:

at least one hardware processor; and software configured to, when executed by the at least one processor,

monitor system frequency within the hydrogen plant,

detect a frequency disturbance in the monitored system frequency, and in response to detecting the frequency disturbance, for each of at least a first subset of a plurality of power resources in the hydrogen plant, determine a power adjustment for the power resource according to a fast frequency response, FFR, scheme, and control the power resource based on the determined power adjustment.

15. A non-transitory computer-readable medium having one or more instructions stored thereon, wherein the instructions, when executed by a processor, cause the processor to:

monitor system frequency within the hydrogen plant; detect a frequency disturbance in the monitored system frequency; and in response to detecting the frequency disturbance, for each of at least a first subset of a plurality of power resources in the hydrogen plant,

determine a power adjustment for the power resource according to a fast frequency response, FFR, scheme, and control the power resource based on the determined power adjustment.

**100**

110 —

Green-Hydrogen Power Plant

Management System
140

180 —

| 155A | Electrolyzer Plant 150A |

| 155B | Electrolyzer Plant 150B |

• 
• 
•

| 155N | Electrolyzer Plant 150N |

| 165A | RES 160A |

| 165B | RES 160B |

• 
• 
•

| 165M | RES 160M |

| 175 | Energy Storage System 170 |

— 190

130 —

Local Power Grid
120

**FIG. 1**

**200**

FIG. 2

**300**

FIG. 3

**400**

410 — Estimate Power Imbalance

420 — Allocate Power Adjustments

430 — Send Power Adjustments to Local Controllers of Power Resources

345 —

360 —

440 — Determine Fast Frequency Response

450 — Determine Frequency Droop Response

Select Maximum as Power Adjustment

460 —

Apply Limit(s)

470 —

Control Power Resource According to Determined Power Adjustment

480 —

**FIG. 4**

**FIG. 5**

**600**

345/360

640

Determine SIR

650

Determine Frequency Droop Response

Calculate Sum as Power Adjustment

660

Apply Limit(s)

670

Control Power Resource According to Determined Power Adjustment

680

# FIG. 6

## Aggregate Frequency Response (p.u.)

## Aggregate Frequency Response (p.u.)

**FIG. 7**

**FIG. 8**

355

910

Calculate Balance Control Error

920

Determine Total Net Power Adjustment to Compensate Balance Control Error

930

Determine Optimal Power Adjustment(s) for Power Resource(s)

**FIG. 9**

Europäisches
Patentamt
European
Patent Office
Office européen
des brevets

# EUROPEAN SEARCH REPORT

**Application Number**

EP 24 20 6440

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 199 099 A (UNIV TSINGHUA; DAHANG UONONE ELECTRICAL CO LTD) 14 June 2024 (2024-06-14) | 1-3,6, 8-10, 12-15 | INV. H02J3/28 C25B1/04 |
| A | * abstract; figures * * paragraphs [0002], [0048] - [0050], [0133] - [0134] * | 4,5,7,11 | C25B15/02 H02J15/00 |
| | ----- | | ADD. |
| X | DOZEIN MEHDI GHAZAVI ET AL: "Virtual Inertia Response and Frequency Control Ancillary Services From Hydrogen Electrolyzers", IEEE TRANSACTIONS ON POWER SYSTEMS, IEEE, USA, vol. 38, no. 3, 10 June 2022 (2022-06-10), pages 2447-2459, XP011939471, ISSN: 0885-8950, DOI: 10.1109/TPWRS.2022.3181853 [retrieved on 2022-06-10] * the whole document * | 1,8-10, 14,15 | H02J3/30 H02J3/32 |
| | ----- | | |
| A | AGREDANO-TORRES MANUEL ET AL: "Dynamic power control for frequency regulation using Hybrid PEM/Alkaline hydrogen electrolyzers and battery system", 2024 ENERGY CONVERSION CONGRESS & EXPO EUROPE (ECCE EUROPE), IEEE, 2 September 2024 (2024-09-02), pages 1-8, XP034754566, DOI: 10.1109/ECCEEUROPE62508.2024.10751940 [retrieved on 2024-11-20] * the whole document * | 7 | **TECHNICAL FIELDS SEARCHED (IPC)** H02J |
| | ----- | | |

The present search report has been drawn up for all claims

| Place of search | Date of completion of the search | Examiner |
|---|---|---|
| Munich | 21 March 2025 | Hartmann, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 20 6440

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | Publication date | Patent family member(s) | Publication date |
|---|---|---|---|
| CN 118199099 A | 14-06-2024 | NONE | |

EPO FORM P0459

For more details about this annex : see Official Journal of the European Patent Office, No. 12/82